# EUROPÄISCHE PATENTSCHRIFT

(11) **EP 2 530 690 B1**
(45) Veröffentlichungstag und Bekanntmachung des Hinweises auf die Patenterteilung: **13.11.2013**
(21) Anmeldenummer: 12181877.7
(22) Anmeldetag: 26.09.2008
(51) Int. Cl.: H01G 4/40, H01G 4/30, H01C 7/18, H01C 17/24, H01C 17/242

(54) **Elektrisches Vielschichtbauelement sowie Verfahren zur Herstellung eines elektrischen Vielschichtbauelements**
Electric multi-layer element and method for producing an electric multi-layer element
Composant multicouche électrique et procédé de fabrication d'un composant multicouche électrique

(30) Priorität: 28.09.2007 DE 102007046607
(43) Veröffentlichungstag der Anmeldung: 05.12.2012
(62) Teilanmeldung aus: 08836233.0
(73) Patentinhaber: EPCOS AG, 81669 München (DE)
(72) Erfinder: Pecina, Axel, 8543 St. Martin (AT); Maric, Zeljko, 44000 Sisak (HR)
(74) Vertreter: Epping - Hermann - Fischer

(56) Entgegenhaltungen:
- EP-A- 0 939 061
- EP-A1- 0 283 881
- JP-A- 3 052 201
- US-A- 5 034 709
- US-A- 5 870 273

## Beschreibung

Es wird ein elektrisches Vielschichtbauelement mit einem Widerstand sowie ein Verfahren zu dessen Herstellung beschrieben.

Aus DE 101 44 364 A1 ist ein elektrisches Vielschichtbauelement mit einem zwischen zwei dielektrischen Schichten angeordneten Widerstand bekannt. US 5 870 273 zeigt ein elektrisches Vielschichtbauelement gemäß dem Oberbegriff des Patentanspruchs 1.

Eine zu lösende Aufgabe besteht darin, ein elektrisches Vielschichtbauelement anzugeben, welches bei einer möglichst klein zu haltenden Baugröße möglichst viele elektrische Funktionen aufweisen kann und leicht herstellbar ist.

Eine weitere zu lösende Aufgabe besteht darin, ein oben angestrebtes Vielschichtbauelement anzugeben, das als Π -Filter verwendbar ist.

Die Aufgaben werden gelöst durch ein elektrisches Vielschichtbauelement gemäß Patentanspruch 1 mit einem Stapel von übereinander angeordneten dielektrischen Schichten und Elektrodenschichten angegeben, bei dem ein mit einer Stirnfläche des Stapels versinterter Widerstand vorgesehen ist. Zur Kontaktierung des Vielschichtbauelements können elektrisch gleichpolige Elektrodenschichten gemeinsam mit einem auf einer Seitenfläche des Stapels angeordneten Außenkontakt kontaktiert werden, und durch das Verfahren gemäß Patentanspruch 12.

Der Widerstand enthält dabei keramisches Widerstandsmaterial, welches sich vorteilhafterweise beim Sintern fest mit dem Stapel verbindet.

Das Widerstandsmaterial verliert seine Eigenschaft als Widerstand nicht bis zu einer Sintertemperatur zwischen 900 °C und 1200 °C. Inbesondere verändert sich sein Widerstandswert höchstens nur geringfügig zwischen Raumtemperatur und Sintertemperatur. Das schließt jedoch nicht aus, dass sich sein Materialgefüge bis zur genannten Temperatur verändert. Auch könnte sich sein Materialgefüge bereits bei einem Verpressen des Stapels verändern, ohne dass seine erwünschte Eigenschaft als Widerstand beeinträchtigt wird.

Vorteilhafterweise kann der Widerstand zusammen mit dem Stapel versintert, gegebenenfalls davor auch verpresst werden, welches bedeutet, dass kein weiterer Herstellungsschritt zur Erzeugung eines Widerstands in bzw. auf einem Stapel nach dem Sintern des Letzteren nötig ist. Der Widerstand kann also gleichzeitig mit dem Stapel druck- bzw. temperaturbehandelt werden.

Es sind beliebige Formen von Widerständen möglich. Dabei könnte der Widerstand auf die Stirnfläche des Stapels in beliebiger Form aufgebracht, beispielsweise aufgedruckt werden, zum Beispiel also mit einer mehrfach gekrümmten Bahn bzw. mit einem mäanderförmigen Verlauf.

Gemäß einer Ausführungsform des Vielschichtbauelements ist der Widerstand als Widerstandsschicht ausgeführt. Das hat den Vorteil, dass ein Stapel aus dielektrischen Schichten, Elektrodenschichten und einer Widerstandsschicht gebildet werden kann, wobei der Stapel in dieser Form verpressbar und sinterbar ist. Die Widerstandsschicht kann bezogen auf ihre Fläche dieselbe Abmessung aufweisen, wie eine dielektrische Schicht des Stapels. Insbesondere kann die Fläche der Widerstandsschicht passend auf die Größe der Stirnfläche des Stapels, welche durch eine Oberfläche einer dielektrischen Schicht des Stapels gebildet sein könnte, abgestimmt sein. Das bedeutet, dass sie die dielektrische Schicht bzw. die Stirnfläche des aus dielektrischen Schichten und Elektrodenschichten gebildeten Stapel im Wesentlichen vollständig abdeckt, vorzugsweise ohne dabei überstehende Bereiche aufzuweisen. Ein so geschaffener, eine Widerstandsschicht umfassender Stapel kann bei geringerem Beschädigungsrisiko gehandhabt bzw. transportiert werden.

Ein als Schicht ausgeführter Widerstand hat die Eigenschaft, durch das Sintern derart hinreichend stabil zu sein, dass keine Schutz- bzw. Passivierungsschicht für den Stapel benötigt wird. Die Widerstandsschicht fungiert also gleichzeitig auch als Schutzschicht für den Stapel. Dennoch könnte der Stapel bei Bedarf mit einer zusätzlichen Passivierungsschicht ausgebildet sein, deren Form die Außenkontakte vorzugsweise ausspart und beispielsweise ein Glas enthalten könnte.

Gemäß einer Ausführungsform des Vielschichtbauelements kann der Widerstand materialabgetragene Bereiche aufweisen. Der Materialabtrag könnte mittels Laserentfernung von Bereichen des Widerstands und / oder durch chemisches Durchätzen der Bereiche entstanden sein. Materialabgegtragene Bereiche des Widerstands sind vorzugsweise zur Feinabstimmung seines Widerstandswertes geschaffen.

Beispielsweise könnte der Widerstand zur Feinabstimmung seines Widerstandswertes zumindest einen Strukturgraben aufweisen. Es können mehrere Strukturgräben vorgesehen sein, die ein regelmäßiges Muster auf der Stirnfläche des Stapels bilden. Die mehreren Strukturgräben können parallel nebeneinander angeordnet sein.

Gemäß einer Ausführungsform verbindet der Widerstand gegenpolige Außenkontakte des Vielschichtbauelements miteinander. Dabei können Bereiche des Widerstands, welche gegebenenfalls nicht oder nur geringfügig einem Materialabtrag unterzogen wurden, diese Außenkontakte miteinander verbinden. Es kann jedoch eine durchgehende Widerstandsschicht alle Außenkontakte des Vielschichtbauelements miteinander verbinden.

Es wurde herausgefunden, dass ein Material auf der Basis von Spinell als Widerstandsmaterial mit dem Stapel von dielektrischen Schichten und Elektrodenschichten besonders günstig gesintert werden kann, ohne dass die Widerstandseigenschaften des Materials dabei beeinträchtigt werden.

Erfindungsgemäß besteht der Widerstand größtenteils aus einer Verbindung der Elemente Wismut (Bi), Zinn (Sn) und Sauerstoff.

Die dielektrischen Schichten des Vielschichtbauelements enthalten gemäß einer Ausführungsform des Stapels eine Varistorkeramik, beispielsweise Zinkoxid (ZnO).

Gemäß einer anderen Ausführungsform des Vielschichtbauelements enthalten die dielektrischen Schichten eine Kondensatorkeramik, beispielsweise aus den Klassen X7R, COG, Z5U.

Die Elektrodenschichten des Stapels enthalten vorzugsweise zumindest eine der folgenden Materialien bzw. eine Legierung der Materialien Palladium (Pd), Kupfer (Cu), Nickel (Ni), Zinn.

Gemäß einer Ausführungsform des elektrischen Vielschichtbauelements umfasst der Widerstand einen Stapel von Widerstandsschichten bzw. mehrere übereinander angeordnete Widerstandsschichten.

Zwischen zwei in Stapelrichtung benachbarten Widerstandsschichten des Widerstands ist gemäß einer Ausführungsform zumindest eine Elektrodenschicht angeordnet, welche mit einem Außenkontakt kontaktiert ist. Dabei können auf einer Widerstandsschicht des Widerstands mehrere Elektrodenschichten angeordnet sein, die jeweils unterschiedliche Außenkontakte kontaktieren.

Zusätzlich oder alternativ kann der Widerstand mehrere Elektrodenschichten aufweisen, die abwechselnd mit Widerstandsschichten übereinander angeordnet sind und in orthogonaler Projektion überlappende Überlappflächen aufweisen. Durch eine geeignete Wahl der Struktur und Anzahl von im Widerstand angeordneten Elektrodenschichten kann sein gewünschter Widerstandswert mitbestimmt werden.

Die Elektrodenschichten des Widerstands haben neben ihren vorteilhaften, Widerstandswert-mitbestimmenden Eigenschaften auch den Vorteil, dass sie eine bessere seitenflächige Anbindung eines Außenkontakts mit dem Widerstand ermöglichen, da sie ein Material enthalten, welches sich mit dem Material Außenkontakt fest bindet.

Der Widerstand weist gemäß einer Ausführungsform sowohl materialabgetragene Bereiche als auch zumindest eine Elektrodenschicht auf. Dabei wird bevorzugt, dass neben der zumindest einen Elektrodenschicht zumindest ein materialabgetragener Bereich des Widerstands vorhanden ist, wobei die Elektrodenschicht vorzugsweise dennoch von Widerstandsmaterial des Widerstands umgeben bzw. von ihr allseitig, bis auf den Kontakt mit einem Außenkontakt, abgedeckt ist.

Beispielsweise könnte ein Strukturgraben parallel neben einer von Widerstandsmaterial abgedeckten Elektrodenschicht verlaufen. Dabei könnte die Elektrodenschicht eine mehrfach sich richtungsändernde Bahn umfassen, wobei ein neben ihr verlaufender Strukturgraben einen gleichen bzw. komplementären Verlauf neben der Elektrodenschicht aufweisen könnte.

Durch eine geeignete Wahl der Struktur und Anzahl von im Widerstand angeordneten Elektrodenschichten kann die Entstehung eines Übersprechwiderstands im Vielschichtbauelement, der als parasitärer Widerstand zu verstehen ist, verhindert oder zumindest minimiert werden. Das elektrische Vielschichtbauelement kann als Array derart ausgeführt sein, dass zumindest ein Elektrodenschichtenstapel des Stapels gleichpolige Elektrodenschichten aufweist, und dieser zumindest einem gleichartigen Stapel gegenpoliger Elektrodenschichten lateral gegenüber liegt. Die Elektrodenschichten der sich gegenüberliegenden Elektrodenschichtenstapel sind auf jeweils einer gemeinsamen dielektrischen Schicht angeordnet und weisen einander zugewandte Enden auf.

Es wird bevorzugt, dass gegenpolige Außenkontakte auf sich gegenüber liegenden Seitenflächen des Vielschichtbauelements angeordnet sind.

Das Vielschichtbauelement umfasst nach einer Ausführungsform zumindest ein Π-Filter, welches über einen Widerstand parallel verschaltete Kondensatoren bzw. Kapazitäten umfasst. Bei dem Widerstand handelt es sich vorzugsweise um den mit dem Stapel versinterten Widerstand und bei den Kapazitäten um solche welche mittels dielektrischen Schichten und in Stapelrichtung benachbarten, gegenpoligen Elektrodenschichten geschaffen werden.

Es wird ein Verfahren zur Herstellung eines elektrischen Vielschichtbauelements angegeben, bei dem ein Stapel von übereinander angeordneten dielektrischen Schichten und Elektrodenschichten geschaffen wird. Es kann sich dabei um keramische Grünfolien handeln, deren Materialien je nach Funktionsziel des Vielschichtbauelements beispielsweise eine Kondensatorkeramik oder eine Varistorkeramik enthalten können. Jede mit einer weiteren dielektrischen Schichten verstapelte dielektrische Schicht kann mit einem Elektrodenmaterial bedruckt sein, um eine Elektrodenschicht zu bilden.

Ein so geschaffener, noch "grüner" Stapel wird deckseitig mit einem Widerstand versehen, der später zusammen mit dem Stapel versintert wird. Dabei kann es sich um eine Folie bestehend aus einem Widerstandsmaterial handeln, welche als Widerstandsschicht auf eine Stirnfläche des Stapels gelegt wird.

Der den stirnseitig angeordneten Widerstand aufweisende Stapel kann zunächst verpresst werden, damit sich die dielektrischen Schichten und der Widerstand binden. Anschließend kann der Stapel mit dem Widerstand in einem hierzu vorgesehenen Ofen bei einer Temperatur von zwischen 900 °C und 1200 °C gesintert werden. Dadurch binden sich die dielektrischen Schichten sowie der Widerstand mit einer stirnseitigen, dielektrischen Endschicht fester miteinander, um somit ein den Widerstand umfassenden monolithischen Stapel zu schaffen.

Vor oder nach dem Sintern kann Material des Widerstands, falls er in der Form einer Schicht auf dem Stapel vorliegt, mittels eines Lasers teilweise entfernt werden, um seinen Widerstandswert genau einzustellen. Alternativ kann das teilweise Abtragen des Widerstandsmaterials mittels eines chemischen Ätzverfahrens erfolgen.

Der Abtrag des Widerstandsmaterials wird vorzugsweise derart ausgeführt, dass der Widerstand eine Struktur aufweist, anhand derer Außenkontakte mittels des Widerstands miteinander verbunden werden. So kann der Widerstand eine Form aufweisen, die beispielsweise eine mehrfach gekrümmte Bahn bildet.

Gemäß einer Ausführungsform des Herstellungsverfahrens werden mehrere Widerstände als Schichten auf die Stirnfläche des Stapels aufgebracht. Zwischen je zwei Widerstandsschichten können ein oder mehrere Elektrodenschichten angeordnet werden bzw. es wird jeweils eine Widerstandsschicht mit einem oder mehrere mit einem Außenkontakt kontaktierbaren Elektrodenschichten bedruckt.

Das Schaffen von mit Außenkontakten kontaktierten Elektrodenschichten auf bzw. zwischen Widerstandsschichten kann zur Feinabstimmung des Wertes des die Widerstandsschichten umfassenden Widerstands dienen. Dies kann zusammen mit dem Abtrag von Widerstandsmaterial von zumindest einer Widerstandsschicht des Widerstands erfolgen.

Die beschriebenen Gegenstände werden anhand der folgenden Figuren und Ausführungsbeispiele näher erläutert. Dabei zeigt:
- Figur 1: eine perspektivische Ansicht eines als Array ausgeführten elektrischen Vielschichtbauelements mit einer Widerstands-Deckschicht,
- Figur 2: eine perspektivische Ansicht des elektrischen Vielschichtbauelements gemäß Figur 1 mit Außenkontakten,
- Figur 3: eine perspektivische Ansicht des mit den Figuren 1 und 2 vorgestellten elektrischen Vielschichtbauelements, wobei die deckseitige Widerstandsschicht materialabgetragene Bereiche aufweist,
- Figur 4: eine Querschnittsansicht eines Bereichs eines elektrischen Vielschichtbauelements, in dem ein mehrere Widerstandsschichten umfassender Widerstand mit Elektrodenschichten angeordnet ist,
- Figur 5: eine Querschnittsansicht eines Bereichs eines elektrischen Vielschichtbauelement, in dem ein mehrere Widerstandsschichten umfassender Widerstand mit Elektrodenschichten auf unterschiedlichen Widerstandsschichten angeordnet ist.

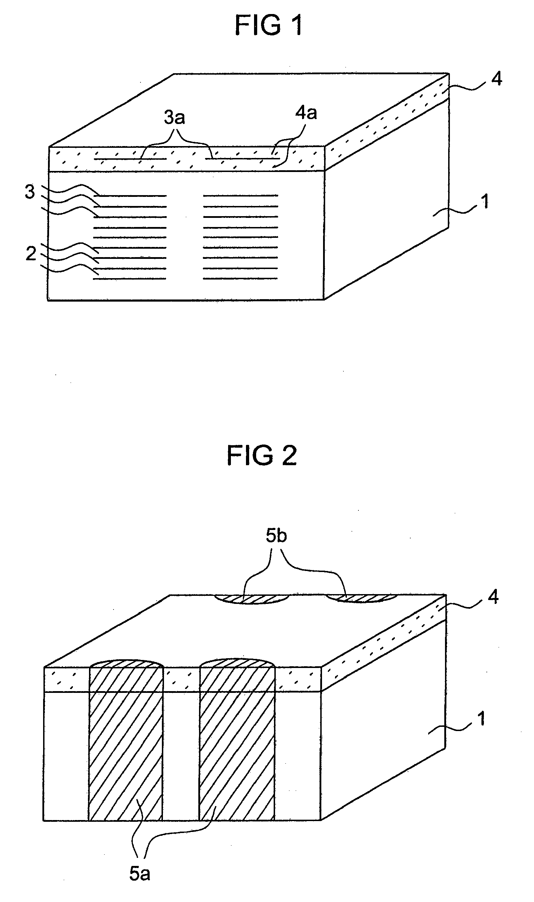

Figur 1 zeigt ein elektrisches Vielschichtbauelement mit einem Stapel 1 von dielektrischen Schichten 2. Auf je einer dielektrischen Schicht 2 des Stapels sind mehrere Elektrodenschichten 3 mit einem Abstand zueinander angeordnet. Die Elektrodenschichten wechseln sich dabei in der Stapelreihenfolge mit den dielektrischen Schichten 2 ab, wobei mehrere Elektrodenschichtenstapel gebildet werden, deren Elektroden jeweils mit einem gleichpoligen Außenkontakt kontaktierbar sind. Dabei sind sie mit je einem Ende bis an die Seitenfläche, d.h. die parallel zur Stapelrichtung verlaufende Seitenfläche des Stapels, herangeführt. Außenkontakte sind in dieser Figur nicht dargestellt um die Positionen der Elektrodenschicht sichtbar zu gestalten.

Auf einer Stirnfläche des Stapels 1, nachfolgend auch als Deckfläche bezeichnet, ist ein Widerstand bzw. ein Widerstandskörper 4 angeordnet, der mehrere Widerstandsschichten 4a umfasst. Auf zumindest einer Widerstandsschicht 4a, in diesem Falle auf der mit der Deckfläche des Stapels 1 verbundenen Widerstandsschicht 4a, sind mehrere voneinander beabstandete Elektrodenschichten 3a angeordnet, welche jeweils mit einem gleichpoligen Außenkontakt kontaktierbar sind.

Die gezeigten Stapel von Elektrodenschichten 3 zeigen jeweils die bis an eine Seitenfläche des Vielschichtbauelements herangeführten Enden gleichpoliger Elektrodenschichten. Auf der gegenüberliegenden Seite des Vielschichtbauelements sind zwei weitere, nicht sichtbare Elektrodenschichtenstapel vorgesehen, deren jeweilige Elektrodenschichten ebenfalls mit je einem Ende bis an die gegenüberliegende Seitenfläche herangeführt sind (bezogen auf die Figur könnte dies als die Rückseitenfläche des Vielschichtbauelements betrachtet werden), wobei die Elektrodenschichten jeweils im Vergleich zu den in der Figur gezeigten Elektrodenschichten gegenpolig sind. Somit kann eine dielektrische Schicht 2 mit vier Elektrodenschichten bedruckt sein, die jeweils mit einem Abstand zueinander quadratisch angeordnet sind. Gegenpolige Elektrodenschichten 3 unterschiedlicher Stapel von Elektrodenschichten überlappen sich in Stapelrichtung teilweise, wobei zwischen diesen Elektrodenschichten das Dielektrikum einer dielektrischen Schicht vorhanden ist. Somit werden im Vielschichtbauelement gemäß Figur 1 zwei Vielschichtkapazitäten gebildet, jeweils mittels des Überlappens von gegenpoligen Elektrodenschichten unterschiedlicher Elektrodenschichtenstapel.

Die an jeweils eine Seitenfläche herangeführten Enden der Elektrodenschichten 3 eines Stapels von Elektrodenschichten sind bezogen auf die Stapelrichtung mit möglichst geringem lateralen Versatz zueinander angeordnet. Somit lässt sich ein ganzer Stapel aus gleichpoligen Elektrodenschichten 3 mit einem so schmal wie möglich ausgeführten Außenkontakt kontaktieren. Sind die Elektrodenschichten rechteckförmig, so weisen sie mit einer solchen Form in ihrer lateral unversetzten Stapelweise gegenseitige maximale Überlappflächen auf, welches die Erzeugung höherer Kapazitäten begünstigt.

Der Widerstand 4 weist auf seiner mit der Deckfläche des Stapels 1 flächig verbundenen Widerstandsschicht 4a ebenfalls vier mit einem Abstand zueinander rechteckig angeordnete Elektrodenschichten 4a auf. Je eine Elektrodenschicht 3a des Widerstandskörpers 4 ist mit einem Ende mit einem Außenkontakt kontaktiert. Die Elektrodenschichten 3a des Widerstands können seinen Widerstandswert reduzieren, welches seiner Feinabstimmung dient.

Vorzugsweise sind die Elektrodenschichten 3a des Widerstands 4 in der gleichen Linie wie die Elektrodenschichten 3 des Stapels 1, bezogen auf die Stapelrichtung des Vielschichtbauelements, angeordnet. Somit können Außenkontakte alle diese kontaktieren, ohne dass ein Bereich eines an eine Seitenfläche des Bauelements herangeführten Endes einer Elektrodenschicht 3 bzw. 3a unkontaktiert bleibt.

Die Elektrodenschichten 3a des Widerstands können dieselben Materialien wie die Elektrodenschichten 3 des Stapels 1 enthalten.

Durch eine geeignete Wahl der Struktur und Anzahl der im Widerstand 4 angeordneten Elektrodenschichten 3a kann das Verhältnis von Aktiv- zu Übersprechwiderstand derart eingestellt werden, dass eine Beeinträchtigung der Filterfunktion des Vielschichtbauelements minimiert wird. Der Aktivwiderstand, insbesondere bei einem als Array ausgeführten Vielschichtbauelement gemäß der Figur 1, ist der gewünschte vom Widerstandskörper 4 bzw. von den Widerstandsschichten 4a gebildete Widerstand. Der Übersprechwiderstand dagegen ist ein parasitärer bzw. unerwünschter Widerstand im Vielschichtbauelement, insbesondere ein solcher, der zwischen den Widerstandsschichten 4a des Vielschichtbauelements erzeugt wird und die Filterfunktion des Vielschichtbauelement beeinträchtigt.

Figur 2 zeigt das Vielschichtbauelement gemäß Figur 1 mit dargestellten Außenkontakten 5a und 5b, welche das Vielschichtbauelement seitlich umklammern bzw. Bereiche an beiden Stirnflächen des Vielschichtbauelements aufweisen. Insbesondere weisen sie jeweils einen Bereich auf der Stirnfläche des Widerstands 4 bzw. der End-Widerstandsschicht 4a des Widerstands auf, einen die Enden der Elektrodenschichten 3a und 3 abdeckenden bzw. kontaktierenden Bereich sowie ein Bereich auf der vom Widerstand abgewandten Stirnfläche des Stapels 1. Die Außenkontakte 5a und 5b sind durch den die Elektrodenschichten 3a umfassenden Widerstand 4 miteinander verbunden.

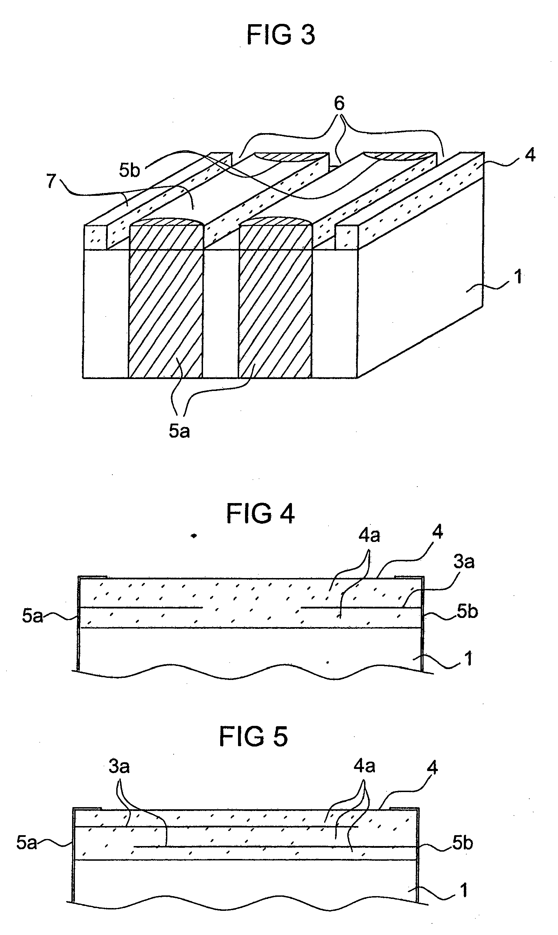

Figur 3 zeigt das Vielschichtbauelement gemäß der Figuren 1 und 2 mit dem Unterschied, dass der Widerstand 4 materialabgetragene Bereiche 6 aufweist, welche mittels eines Materialabtragverfahrens, beispielsweise unter Verwendung eines Lasers, geschaffen wurden. Die materialabgetragenen Bereiche 6 sind aus parallel zueinander verlaufenden Strukturgräben gebildet, welche parallel neben den Längsseiten der im Widerstand integrierten Elektrodenschichten 3a verlaufen. Vorzugsweise sind die Elektrodenschichten 3a des Widerstands dennoch von Widerstandsmaterial umgeben. Die Bereiche des Widerstands, die nach dem teilweisen Materialabtrag des Widerstands noch Widerstandsmaterial und Elektrodenschichten 3a umfassen, sind im Verhältnis zu den Strukturgräben als Mesastrukturen 7 ausgebildet. Die Mesastrukturen 7 des Widerstands, welche Widerstandsmaterial und Elektrodenschichten umfassen, verbinden geradlinig sich gegenüber liegende Außenkontakte 5a und 5b. Die Mesastrukturen des Widerstands, die mit Außenkontakten verbunden sind, sind vorzugsweise jeweils von diesen an ihren Enden teilweise umklammert.

Figur 4 zeigt den Schnitt eines Bereiches eines elektrischen Vielschichtbauelements, der einen Widerstand 4 mit mehreren Widerstandsschichten 4a umfasst. Zwischen zwei in Stapelrichtung benachbarten Widerstandsschichten 4a sind auf der unteren Widerstandsschicht 4a sich gegenüberliegende mehrere Elektrodenschichten 3a angeordnet. Ihre nach innen gerichteten Enden sind voneinander beabstandet. Der Schnitt zeigt zwei Elektrodenschichten, die jeweils mit einem zu jeweils einer Seitenfläche hin herangeführten Ende mit einem Außenkontakt 5a bzw. 5b verbunden sind. Auf derselben Widerstandsschicht 4a können jedoch weitere Elektrodenschichten 3a bereitgestellt sein, welche in der gleichen Weise Außenkontakte kontaktieren.

Figur 5 zeigt den Schnitt eines Bereiches eines elektrischen Vielschichtbauelements, der einen Widerstand 4 mit mehreren Widerstandsschichten 4a umfasst, wobei sich Elektrodenschichten in orthogonaler Projektion teilweise überlappen. Dabei kann auf jeder Widerstandsschicht zumindest eine mit einem Ende mit einem Außenkontakt verbundene Elektrodenschicht 3a aufgebracht sein, welche mit einer weiteren Elektrodenschicht, die auf einer anderen Widerstandsschicht aufgebracht ist, eine Überlappfläche bildet.

### Bezugszeichenliste

- 1: Stapel von dielektrischen Schichten und Elektrodenschichten
- 2: dielektrische Schicht
- 3: Elektrodenschicht
- 3a: in einem Widerstand integrierte Elektrodenschicht
- 4: Widerstand
- 4a: Widerstandsschicht
- 5a: erster Außenkontakt
- 5b: zweiter, im Vergleich zum ersten Außenkontakt gegenpoliger Außenkontakt
- 6: Strukturgraben des Widerstands
- 7: Mesastruktur des Widerstands

## Patentansprüche

1. Elektrisches Vielschichtbauelement, aufweisend
- einen Stapel (1) von übereinander angeordneten dielektrischen Schichten (2) und Elektrodenschichten (3), wobei
- elektrisch gleichpolige Elektrodenschichten gemeinsam mit einem an einer Seitenfläche des Stapels angeordneten Außenkontakt (5a, 5b) kontaktiert sind, und wobei
- ein mit dem Stapel versinterter Widerstand (4), der ein keramisches Widerstandsmaterial enthält, auf einer Stirnfläche des Stapels angeordnet ist, **dadurch gekennzeichnet dass** der Widerstand größtenteils aus einer Verbindung der Elemente Bismut, Zinn und Sauerstoff besteht.

2. Elektrisches Vielschichtbauelement nach Anspruch 1, bei dem der Widerstand (4) als Widerstandsschicht (4a) ausgeführt ist.

3. Elektrisches Vielschichtbauelement nach einem der Ansprüche 1 oder 2, bei dem der Widerstand (4) zur Feinabstimmung seines Widerstandswertes materialabgetragene Bereiche aufweist, die mit zumindest einer der folgenden Methoden geschaffen sind: Laserabtrag, chemisches Durchätzen.

4. Elektrisches Vielschichtbauelement nach Anspruch 3, bei dem als materialabgetragene Bereiche mehrere Strukturgräben (6) parallel nebeneinander angeordnet sind.

5. Elektrisches Vielschichtbauelement nach einem der Ansprüche 2 bis 4, bei dem der Widerstand (4) einen Stapel von Widerstandsschichten (4a) umfasst.

6. Elektrisches Vielschichtbauelement nach Anspruch 5, bei dem zwischen in Stapelrichtung benachbarten Widerstandsschichten (4a) des Widerstands (4) zumindest eine Elektrodenschicht (3a) angeordnet ist, welche mit einem Außenkontakt (5a, 5b) kontaktiert ist.

7. Elektrisches Vielschichtbauelement nach Anspruch 6, bei dem im Widerstand (4) mehrere gegenpolige Elektrodenschichten (3a) abwechselnd mit Widerstandsschichten (4a) übereinander angeordnet sind und in orthogonaler Projektion überlappende Überlappflächen aufweisen.

8. Elektrisches Vielschichtbauelement nach Anspruch 6, bei dem im Widerstand (4) zumindest eine Elektrodenschicht (3a) einer gegenpoligen Elektrodenschicht auf einer gemeinsamen Widerstandsschicht (4a) gegenüberliegt.

9. Elektrisches Vielschichtbauelement nach einem der Ansprüche 6 bis 8, bei dem der Widerstand (4) neben der zumindest einen Elektrodenschicht (3a) des Widerstands zumindest einen Strukturgraben (6) aufweist.

10. Elektrisches Vielschichtbauelement nach einem der vorhergehenden Ansprüche, bei dem
- der Stapel (1) als Array mehrere Stapel von Elektrodenschichten (3) umfasst, wobei
- gleichpolige Elektrodenschichten eines jeden Elektrodenschichtstapels mit einem gleichpoligen Außenkontakt (5a, 5b) kontaktiert sind, und
- lateral nebeneinander angeordnete Elektrodenschichten unterschiedlicher Elektrodenschichtenstapel auf gemeinsamen dielektrischen Schichten (2) angeordnet sind.

11. Elektrisches Vielschichtbauelement nach Anspruch 10, das ein Π-Filter ist.

12. Verfahren zur Herstellung eines elektrischen Vielschichtbauelements, bei dem
- ein Stapel (1) von übereinander angeordneten grünen dielektrischen Schichten (2) mit jeweils zumindest einer aufgedruckten Elektrodenschicht (3) gebildet wird,
- auf einer Stirnfläche des Stapels ein keramisches Widerstandsmaterial enthaltender Widerstand (4) aufgebracht wird,
- der Stapel mit dem Widerstand verpresst wird,
- der Stapel mit dem Widerstand gesintert wird, **dadurch gekennzeichnet dass** der Widerstand größtenteils aus einer Verbindung der Elemente Bismut, Zinn und Sauerstoff besteht.

13. Verfahren nach Anspruch 12, bei dem als Widerstand (4) ein Stapel von Widerstandsschichten (4a) auf die Stirnfläche des Stapels (1) aufgebracht wird.

14. Verfahren nach Anspruch 13, bei dem ein Stapel von Widerstandsschichten (4a) und Elektrodenschichten (3a) auf die Stirnfläche des Stapels (1) aufgebracht wird.

15. Verfahren nach einem der Ansprüche 12 bis 14, bei dem Widerstandsmaterial vom Widerstand (4) als Strukturgraben (6) nach einem der folgenden Verfahren abgetragen wird: Laserentfernung, chemisches Durchätzen.

## Claims

1. Electrical multilayer component, having
- a stack (1) of dielectric layers (2) and electrode layers (3) arranged one above another, wherein
- electrode layers of identical electrical polarity are jointly contact-connected to an external contact (5a, 5b) arranged at a side face of the stack, and wherein
- a resistor (4) sintered to the stack and containing a ceramic resistance material is arranged on an end face of the stack, **characterized in that** the resistor consists for the most part of a compound of the elements bismuth, tin and oxygen.

2. Electrical multilayer component according to Claim 1, wherein the resistor (4) is embodied as a resistance layer (4a).

3. Electrical multilayer component according to either of Claims 1 and 2, wherein the resistor (4) has material-removed regions for the fine tuning of its resistance value, said regions being produced by at least one of the following methods: laser removal, chemical etching through.

4. Electrical multilayer component according to Claim 3, wherein a plurality of structure trenches (6) are arranged parallel alongside one another as material-removed regions.

5. Electrical multilayer component according to any of Claims 2 to 4, wherein the resistor (4) comprises a stack of resistance layers (4a).

6. Electrical multilayer component according to Claim 5, wherein at least one electrode layer (3a) is arranged between resistance layers (4a) of the resistor (4) which are adjacent in the stacking direction, said at least one electrode layer being contact-connected to an external contact (5a, 5b).

7. Electrical multilayer component according to Claim 6, wherein, in the resistor (4), a plurality of electrode layers (3a) of opposite polarity are arranged alternately with resistance layers (4a) one above another and have overlap areas which overlap in orthogonal projection.

8. Electrical multilayer component according to Claim 6, wherein, in the resistor (4), at least one electrode layer (3a) lies opposite an electrode layer of opposite polarity on a common resistance layer (4a).

9. Electrical multilayer component according to any of Claims 6 to 8, wherein the resistor (4) has at least one structure trench (6) alongside the at least one electrode layer (3a) of the resistor.

10. Electrical multilayer component according to any of the preceding claims, wherein
- the stack (1) comprises a plurality of stacks of electrode layers (3) as an array, wherein
- electrode layers of identical polarity in each electrode layer stack are contact-connected to an external contact (5a, 5b) of identical polarity, and
- electrode layers arranged laterally alongside one another in different electrode layer stacks are arranged on common dielectric layers (2).

11. Electrical multilayer component according to Claim 10, which is a Π filter.

12. Method for producing an electrical multilayer component, wherein
- a stack (1) of green dielectric layers (2) arranged one above another with in each case at least one electrode layer (3) printed thereon is formed,
- a resistor (4) containing ceramic resistance material is applied on an end face of the stack,
- the stack is pressed with the resistor,
- the stack is sintered with the resistor, **characterized in that** the resistor consists for the most part of a compound of the elements bismuth, tin and oxygen.

13. Method according to Claim 12, wherein, as the resistor (4), a stack of resistance layers (4a) is applied to the end face of the stack (1).

14. Method according to Claim 13, wherein a stack of resistance layers (4a) and electrode layers (3a) is applied to the end face of the stack (1).

15. Method according to any of Claims 12 to 14, wherein resistance material is removed from the resistor (4) as a structure trench (6) according to one of the following methods: laser removal, chemical etching through.

## Revendications

1. Composant multicouche électrique, comprenant
- un empilement (1) de couches diélectriques (2) et de couches d'électrodes (3) disposées les unes sur les autres, dans lequel
- des couches d'électrodes électriques de même polarité sont mises en contact avec un contact externe (5a, 5b) disposé sur une face latérale de l'empilement, et dans lequel
- une résistance (4) frittée avec l'empilement, qui contient un matériau de résistance céramique, est disposée sur une face avant de l'empilement, **caractérisé en ce que** la principalement constitué par un composé des éléments bismuth, étain et oxygène.

2. Composant multicouche électrique selon la revendication 1, dans lequel la résistance (4) est réalisée sous la forme d'une couche de résistance (4a).

3. Composant multicouche électrique selon l'une quelconque des revendications 1 ou 2, dans lequel la résistance (4) comprend des zones d'ablation de matériau destinées à l'ajustement fin de sa valeur de résistance, lesquelles zones sont créées au moyen d'au moins l'une des méthodes suivantes : ablation au laser, gravure chimique.

4. Composant multicouche électrique selon la revendication 3, dans lequel une pluralité de tranchées structurelles (6) sont disposées parallèlement les unes aux autres en tant que zones d'ablation de matériau.

5. Composant multicouche électrique selon l'une quelconque des revendications 2 à 4, dans lequel la résistance (4) comprend un empilement de couches de résistance (4a).

6. Composant multicouche électrique selon la revendication 5, dans lequel au moins une couche d'électrode (3a) est disposée entre des couches de résistance (4a) de la résistance (4) voisines les unes des autres dans la direction d'empilement, laquelle couche d'électrode est en contact avec un contact externe (5a, 5b).

7. Composant multicouche électrique selon la revendication 6, dans lequel une pluralité de couches d'électrodes de pôles opposés (3a) sont disposées les unes sur les autres de manière alternée avec des couches de résistance (4a) dans la résistance (4) et comprennent des surfaces de chevauchement se chevauchant en projection orthogonale.

8. Composant multicouche électrique selon la revendication 6, dans lequel au moins une couche d'électrode (3a) est située en face d'une couche d'électrode de pôle opposé dans la résistance (4) sur une couche de résistance commune (4a).

9. Composant multicouche électrique selon l'une quelconque des revendications 6 à 8, dans lequel la résistance (4) comprend à côté de l'au moins une couche d'électrode (3a) de la résistance au moins une tranchée structurelle (6).

10. Composant multicouche électrique selon l'une quelconque des revendications précédentes, dans lequel
- l'empilement (1) comprend de multiples empilements de couches d'électrodes (3) sous la forme d'un réseau, dans lequel
- des couches d'électrodes de même polarité d'un empilement de couches d'électrodes sont mises en contact avec un contact externe de même polarité (5a, 5b), et
- des couches d'électrodes disposées latéralement côte à côte d'empilements de couches d'électrodes différents sont disposées sur des couches diélectriques communes (2).

11. Composant multicouche électrique selon la revendication 10, consistant en un filtre Π.

12. Procédé de fabrication de composants multicouches électriques, dans lequel
- un empilement (1) de couches diélectriques vertes (2) disposées les unes sur les autres est formé respectivement avec au moins une couche d'électrode imprimée (3),
- une résistance (4) comprenant un matériau de résistance céramique est déposée sur une face avant de l'empilement,
- l'empilement est comprimé avec la résistance,
- l'empilement est fritté avec la résistance, **caractérisé en ce que** la principalement constitué par un composé des éléments bismuth, étain et oxygène.

13. Procédé selon la revendication 12, dans lequel un empilement de couches de résistance (4a) est déposé en tant que résistance (4) sur la face avant de l'empilement (1).

14. Procédé selon la revendication 13, dans lequel un empilement de couches de résistance (4a) et de couches d'électrodes (3a) est déposé sur la face avant de l'empilement (1).

15. Procédé selon l'une quelconque des revendications 12 à 14, dans lequel du matériau de résistance est enlevé de la résistance (4) sous la forme de tranchées structurelles (6) selon l'un des procédés suivants : ablation au laser, gravure chimique.
